Europäisches Patentamt

European Patent Office

Office européen des brevets

(11) Publication number: **0 060 645**
**A1**

# (12) EUROPEAN PATENT APPLICATION

(21) Application number: **82301044.2**

(22) Date of filing: **02.03.82**

(51) Int. Cl.³: **A 47 J 31/00, A 47 J 31/40**

(30) Priority: **12.03.81 GB 8107735**

(43) Date of publication of application: **22.09.82**
**Bulletin 82/38**

(84) Designated Contracting States: **CH DE FR GB IT LI**

(71) Applicant: **Mars Limited, 143-149 Fenchurch Street, London, E.C.3. (GB)**

(72) Inventor: **Horton, Edward Christopher, 16 Laburnham Road, Maidenhead Berks. (GB)**

(74) Representative: **Colgan, Stephen James et al, CARPMAELS & RANSFORD 43 Bloomsbury Square, London WC1A 2RA. (GB)**

(54) **Liquid dispensing apparatus.**

(57) A liquid dispensing apparatus for dispensing liquid into a container (6) at a dispensing station in which two or more nozzles (3, 4) are arranged symmetrically around a central axis and are fed with liquid from a reservoir (1) by a pump (2). The nozzles (3, 4) are inclined from the vertical so as to produce a swirling action as the liquid hits the bottom of the container (6).

The apparatus is particularly suited to an in-cup dispensing station.

## LIQUID DISPENSING APPARATUS

The present invention relates to liquid dispensing apparatus for dispensing liquid into a container at a dispensing station, and particularly for dissolving and/or dispersing solid material in a container such as a cup.

In apparatus for dispensing drinks, for example, tea, coffee, chocolate, soft drinks or soups, liquid is added to a container which contains solid particulate material which then dissolves and/or disperses in the liquid. In order that the dispensing cycle should be as short as possible, it is highly desirable that the solution and/or dispersion of the solid material should be as rapid as possible. It is also important that the solid material should be completely dissolved and/or dispersed in the liquid so as to gain maximum flavour from the drink and avoid wastage of the solid material.

This invention relates particularly, though not exclusively, to a drinks preparation concept known as the in-cup system whereby the solid material is previously placed in beverage containers in pre-measured portions and all that is required is the addition of hot or cold water from a liquid dispensing apparatus.

In such an apparatus it is normal to dispense the water into a container at a dispensing station through a single nozzle which is usually positioned vertically above the container while the drink is being prepared. This produces a single vertical jet of water, the water being gravity fed from a storage tank above the dispensing position.

It has been found that with such a dispensing apparatus rapid and complete solution and/or dispersion of certain solid materials is difficult to achieve. This is particularly so when dispensing thick drinks such as soups or chocolate where a considerable quantity of solid material has to be dissolved and/or dispersed.

We have now designed a liquid dispensing apparatus which improves the interaction between the liquid dispensed and the solid material in a container and enables both rapid and complete solution and/or dispersion to be achieved even when dispensing thick drinks.

According to the present invention there is provided a liquid dispensing apparatus for dispensing liquid into a container at a dispensing station, which comprises a source of liquid and two or more nozzles connected to the source of liquid, the nozzles being arranged uniformly around a central vertical axis with each nozzle inclined to the vertical in a plane parallel to but displaced from the central vertical axis and being positioned so that, in use, a jet of liquid from each nozzle enters a container at the dispensing station.

The inclining of the plurality of nozzles causes a swirling action in the liquid as it is dispensed into the container which stirs the solid material and produces an improved interaction between the liquid and the solid material.

Preferably the source of liquid comprises a liquid reservoir with a pump connecting the reservoir to the nozzles so as to supply liquid under increased pressure to the nozzles.

A liquid dispensing apparatus constructed in accordance with the present invention will now be described by way of example and with reference to the accompanying drawings in which:

Figure 1 is a diagrammatic side view of the apparatus;

Figure 2 is a side view of the dispensing station with a container in position; and

Figure 3 is a top view of the dispensing station corresponding to Figure 2.

The apparatus, which may stand on its own or be part of a larger automated vending machine, comprises a reservoir or tank of heated water 1 and a pump 2 connected between the reservoir and two nozzles 3, 4, at a dispensing station. A platform 5 at the dispensing station is arranged to support a container 6 in a predetermined position immediately below the nozzles 3, 4.

A conventional control mechanism (not shown) is provided for the pump so that water is dispensed into the container only when required and so that the amount of water dispensed each time can be controlled. In an automated vending machine this control mechanism is linked to a coin operated selector mechanism which selects a container with the solid material in it to make a selected drink and transfers the container to the dispensing station automatically.

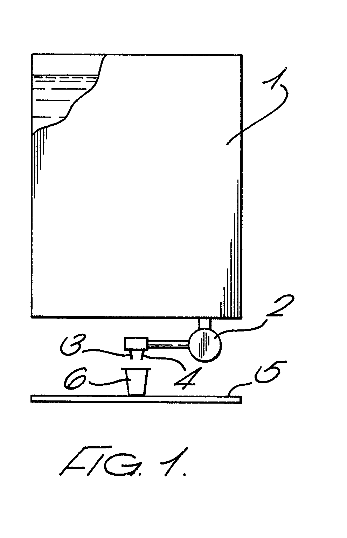

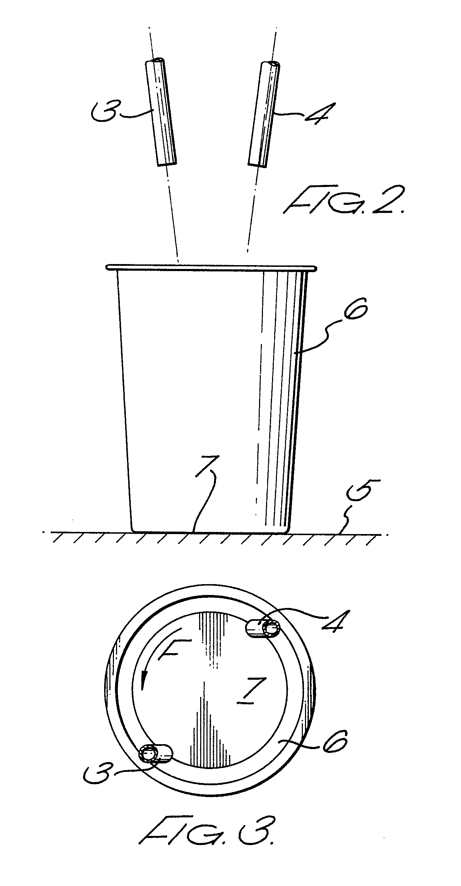

Referring particularly to Figures 2 and 3, the nozzles 3, 4 are tubular and are arranged relative to the base 7 of the container 6 when it is in its predetermined position on the platform 5, so as to produce a swirling motion of the water as it enters the container. Each nozzle lies in a vertical plane parallel to but displaced from the central axis of the container 6 and is inclined at an angle from the vertical. The angle of inclination is set to give good solution and/or dispersion of the solid material and in the illustrated apparatus is approximately 7°. Each nozzle is also positioned so that the jet of water from the nozzle strikes the inside of the container in a region at or near the wall of the container approximately on the line through the centre of the container which intersects the plane of the nozzle at right angles.

The two nozzles are symmetrically placed on either side of the central axis of the container and this inclined tangential positioning of the nozzles produces two jets of water which strikes the solid material in the bottom of the container and carry it around in a swirling motion indicated by arrow F during dispensing of the water. The swirling motion provides a vigorous mixing of the solid material and the water so as to assist in the rapid dissolving and/or dispersion of the solid material. This is further aided by the pressure of the pumped water which also causes air to become entrained with the water so as to produce frothing of the mixture. Such frothing improves the texture and appearance of certain drinks, in particular hot chocolate. A higher pressure of pumped water can be used in this apparatus than would be possible in a conventional dispensing apparatus since the inclination of the nozzles from the vertical reduces splashing and the symmetrical disposition of the two nozzles balances the non-vertical forces which would otherwise tend to overturn the container.

The apparatus has been described with two nozzles. It is, however, possible to have more than two such nozzles arranged symmetrically around the central axis of the container and it is also possible to have a further vertical nozzle arranged above the centre of the container so as to provide further mixing if required.

The apparatus may be used to dispense either hot or cold water, or any other suitable liquid and although it has been described for use in an in-cup system where the containers are of a standard size and already contain the necessary solid material, it is also applicable to other systems of dispensing drinks provided the containers used are of a suitable size and shape such that the jets of liquid produce the required swirling motion.

Claims:

1.    Liquid dispensing apparatus for dispensing liquid into a container at a dispensing station, comprising a source of liquid and two or more nozzles connected to the source of liquid, the nozzles being arranged uniformly around a central vertical axis with each nozzle inclined to the vertical in a plane parallel to but displaced from the central vertical axis and being positioned so that, in use, a jet of liquid from each nozzle enters a container at the dispensing station.

2.    Liquid dispensing apparatus according to claim 1, wherein each nozzle is positioned so that, in use, the jet of liquid from the nozzle strikes the inside of a container at the dispensing station in a region lying substantially on the line through the central vertical axis which intersects the vertical plane of the nozzle at right angles.

3.    Liquid dispensing apparatus according to claim 1 or 2, wherein each nozzle is positioned so that, in use, the jet of liquid from the nozzle strikes the inside of a container at the dispensing station in a region at or near the wall of the container.

4.    Liquid dispensing apparatus according to any preceding claim, wherein a further nozzle is connected to the source of liquid, the further nozzle being positioned vertically along the central vertical axis.

5.    Liquid dispensing apparatus according to any preceding claim, wherein the source of liquid comprises a liquid reservoir with a pump connecting the reservoir to the nozzles, so as to supply liquid under increased pressure to the nozzles.

6.    Liquid dispensing apparatus according to any preceding claim, wherein the inclined nozzles are each at approximately 7° to the vertical.

7.    Liquid dispensing apparatus substantially as herein described with reference to and as illustrated by the accompanying drawings.

FIG. 1.

FIG.2.

FIG.3.

**European Patent Office**

**EUROPEAN SEARCH REPORT**

0060645

## DOCUMENTS CONSIDERED TO BE RELEVANT

| Category | Citation of document with indication, where appropriate, of relevant passages | Relevant to claim |
|---|---|---|
| X | GB - A - 2 019 813 (WITTENBORG) <br><br> * the whole document * | 1-7 |
| X | US - A - 2 843 293 (BURGOYNE) <br><br> * column 4, lines 31-45; figure 4 * | 1-3,7 |
| A | US - A - 3 364 959 (HERMAN et al.) <br><br> * column 3, lines 55-60; figures 1 and 2 * | 1 |
| A | US - A - 3 084 613 (MAXSON) <br><br> * column 4, lines 7-13; figures 2 and 3 * | 1 |
| A | US - A - 2 653 733 (RUDD) -- <br><br> * the whole document * | 1,2,3 |
| A | US - A - 3 529 749 (LEHMANN et al) <br><br> * the whole document * | 1,5 |

---

**CLASSIFICATION OF THE APPLICATION (Int. Cl. 3)**

A 47 J 31/00
31/40

**TECHNICAL FIELDS SEARCHED (Int.Cl. 3)**

A 47 J
G 07 F
B 67 D

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 04-06-1982 | SCHARTZ |

EPO Form 1503.1 06.78